# EUROPÄISCHE PATENTSCHRIFT

(11) **EP 0 717 673 B1**
(45) Veröffentlichungstag und Bekanntmachung des Hinweises auf die Patenterteilung: **12.01.2000**
(21) Anmeldenummer: 94925334.8
(22) Anmeldetag: 30.08.1994
(51) Int. Cl.: B23K 11/25, G05B 19/416

(54) **VERFAHREN ZUM WIDERSTANDSSCHWEISSEN**
RESISTANCE-WELDING METHOD
PROCEDE DE SOUDAGE PAR RESISTANCE

(30) Priorität: 11.09.1993 DE 4330914
(43) Veröffentlichungstag der Anmeldung: 26.06.1996
(73) Patentinhaber: ROBERT BOSCH GMBH, 70442 Stuttgart (DE)
(72) Erfinder: ARNDT, Volker, D-64711 Erbach (DE); GOETZ, Eckart, D-64711 Erbach (DE); STELLWAG, Dieter, D-64711 Erbach (DE); GRIMM, Wolfgang, D-64720 Michelstadt (DE)
(86) Internationale Anmeldenummer: DE9400997
(87) Internationale Veröffentlichungsnummer: WO9507165

(56) Entgegenhaltungen:
- EP-A- 0 436 040
- DE-A- 4 033 697
- DE-A- 4 212 575
- PROCEEDINGS OF THE 1992 AMERICAN CONTROL CONFERENCE, Bd.3, 26. Juni 1992, CHICAGO ( USA ) Seiten 1926 - 1930 REINHART ET AL. 'Application of fuzzy logic control to an ERW tube welding industrial process'

## Beschreibung

### Stand der Technik

Die Erfindung betrifft ein Verfahren zum Widerstandsschweißen unter Verwendung eines Mikroprozessors. Um beim Schweißen mit bekannten Widerstandsschweißanordnungen das Erreichen einer hohen Schweißgüte sicherzustellen, ist es üblich, eine oder mehrere der für die Güte eines Schweißprozesses verantwortlichen physikalischen Größen in einem geschlossenen Kreis mit einem Mikroprozessor zu regeln. Typische geregelte Prozeßgrößen sind beispielsweise der Schweißstrom, die Schweißspannung, die aufgebrachte Energie, die Elektrodenandruckkraft oder die Schweißdauer.

Zur Erfassung der zu regelnden Größen dienen bekannte Sensoren. Deren Ausgangsgrößen werden dem Mikroprozessor zugeleitet, der sie, zum Beispiel aufgrund eines theoretischen Prozeßmodells des Schweißvorganges, verarbeitet. Eine wesentliche Schwierigkeit bei der Durchführung einer solchen Regelung bildet die Komplexität des Schweißprozesses. Er hängt von einer großen Zahl von Einflußgrößen ab, die über starke Nichtlinearitäten miteinander verkoppelt sind. Einige Einflußgrößen, Elektrodenverschleiß, schlechte Passung der Fügeteile oder Schweißlinsenwachstum, sind im allgemeinen nur relativ ungenau erfaßbar oder, wie zum Beispiel die Elektrodenbewegung, oder der Elektroden-Kraftverlauf, in ihrer Bedeutung für die Prozeßgüte unklar. In der Regel ist deshalb die Prozeßstruktur im Detail unbekannt, und ein genaues theoretisches Prozeßmodell aus diesem Grund nicht erstellbar. Wegen dieser Problematik werden bei bekannten Schweißanordnungen im allgemeinen nur eine bis zwei Einflußgrößen geregelt bzw. zur Diagnose herangezogen. Damit wird die erreichbare Schweißqualität bei diesen Anordnungen insbesondere durch die nicht berücksichtigten Einflußgrößen begrenzt.

Zur Handhabung ungenauer Größen ist der Vorschlag bekannt, hierzu eine auf den Gesetzen der unscharfen Logik (Fuzzy-Logik) beruhende Regelung zu verwenden, zum Beispiel zur Reaktion auf unvorhergesehene Betriebszustände gemäß EP-OS 436 040, oder um einem Bediener die Möglichkeit einzuräumen, nicht exakte Begriffe als Eingangsgrößen einzugeben, gemäß DE-OS 42 12 575.

Aus dem Artikel "Application of Fuzzy Logic Control to an ERW Tube Welding Industrial Process" von Reinhart at all, Institute of Electrical and Electronics Engineers, in Band 3 der "Proceedings of the 1992 American Control Conference", 26.06.1992, Chicago (USA), Seiten 1926 bis 1930, ist eine Regelungsanordnung mit einem Fuzzy-Regler zur Steuerung eines Schweißprozesses entnehmbar. Diesem ist als einzige Eingangsgröße ein zur erreichten Schweißqualität proportionales Wirbelstromsignal zugeführt. Er liefert als Ausgangsgröße ein Temperatursignal. Daneben ist eine weitere, komplexere Fuzzy-Steuerung unter Berücksichtigung einer Vielzahl von Eingangsgrößen vorgesehen, die aber nur zur Vorsteuerung der Schweißleistung dient.

Aus der DE-A-40 33 697, die als nächstliegender Stand der Technik angesehen wird, sind ein Verfahren und eine Vorrichtung zum Anpassen vorzugebender Werte von Regelparametern der Prozeßregelung beim Schweißen an mindestens eine individuelle Schweißaufgabe bekannt. Die Regelung des Schweißprozesses erfolgt über die Stellgröße Phasenanschnittwinkel, wobei der Phasenanschnittwinkel mit Hilfe von während des Schweißbetriebs fortlaufend variierten Parametern bestimmt wird. Die Werte der entsprechenden Regelparametern werden in Abhängigkeit von vorangegangenen Einsatzfällen vorgegeben. Aus dem ursprünglichen Ausgangswert des Parameters, dem Referenzwert des Steuersignals und dem aktuellen Steuerwert ermittelt sich der aktualisierte Parameter nach einer bestimmten Rechenvorschrift.

Aufgabe der vorliegenden Erfindung ist es, die Struktur eines Steuerverfahrens anzugeben, welches gegenüber bekannten Schweißanordnungen eine größere Zahl von Einflußgrößen berücksichtigt und somit eine verbesserte Qualität der Schweißergebnisse liefert.

Diese Aufgabe wird gelöst durch eine Vorrichtung mit den Merkmalen des unabhängigen Anspruchs. Zur Realisierung der erfindungsgemäßen Widerstandsschweißanordnung ist die Kenntnis eines exakten Streckenmodelles nicht mehr erforderlich. Die Anforderungen an die Genauigkeit, mit der die bei der Steuerung berücksichtigten Einflußgrößen erfaßt werden, sind gegenüber mit Prozeßmodellen arbeitenden Regelungen geringer, so daß einfachere und dadurch in der Regel billigere Sensoren verwendet werden können. Nur sehr ungenau erfaßbare oder für sich allein überhaupt keine Informationen über den Schweißvorgang liefernde Meßgrößen können durch Verknüpfen mit anderen Meßgrößen zu sinnvollen Informationen zusammengefaßt werden.

Eine erfindungsgemäße Steuerungsstruktur ist leicht an unterschiedliche Schweißanordnungen anpaßbar. Hierzu müssen lediglich die Zugehörigkeitsfunktionen für die betrachteten Einflußgrößen und die Verknüpfungsregeln angepaßt werden. Durch entsprechende Änderungen der Verknüpfungsregeln ist es jederzeit möglich, vorhandenes Expertenwissen in die Steuerung einzubeziehen.

Vorteilhafte Anwendungen der erfindungsgemäßen Widerstandsschweißanordnung sind, neben der Regelung von Schweißeinflußgrößen die Erzeugung von Führungsgrößen, das Nachführen von Parametern unterlagerter Online-Regler sowie die Überwachung und Diagnose des Schweißprozesses durch Auswertung der ermittelten Einflußgrößen.

Nachfolgend wird ein Ausführungsbeispiel der vorgeschlagenen vorrichtung anhand der Zeichnung näher erläutert.

### Zeichnung

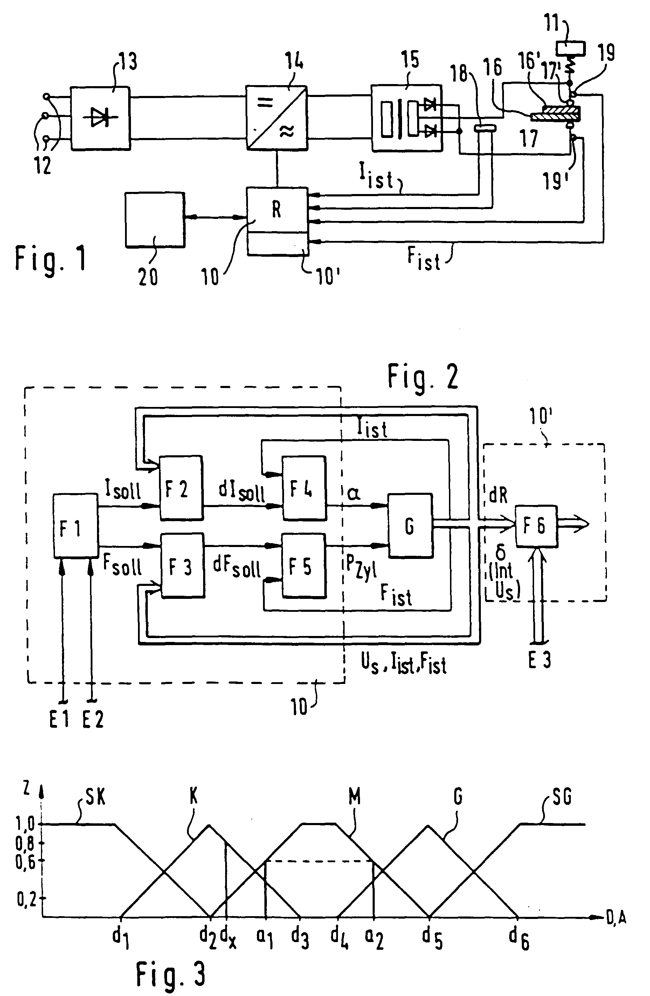

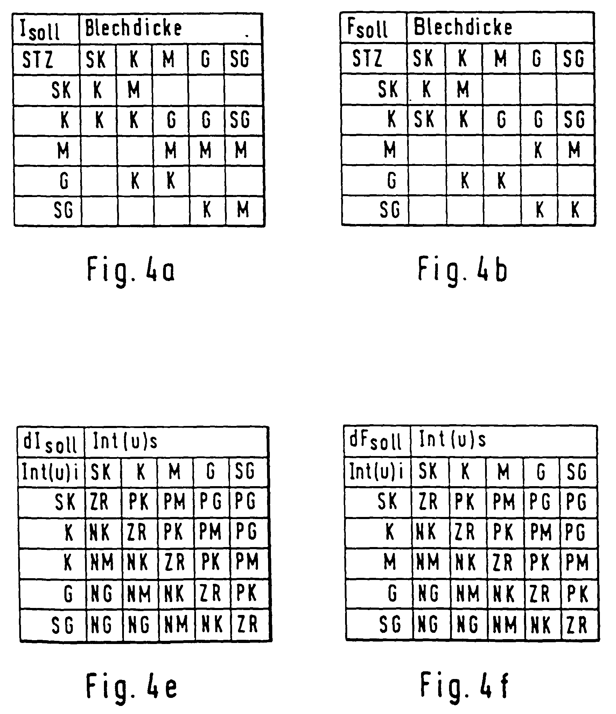

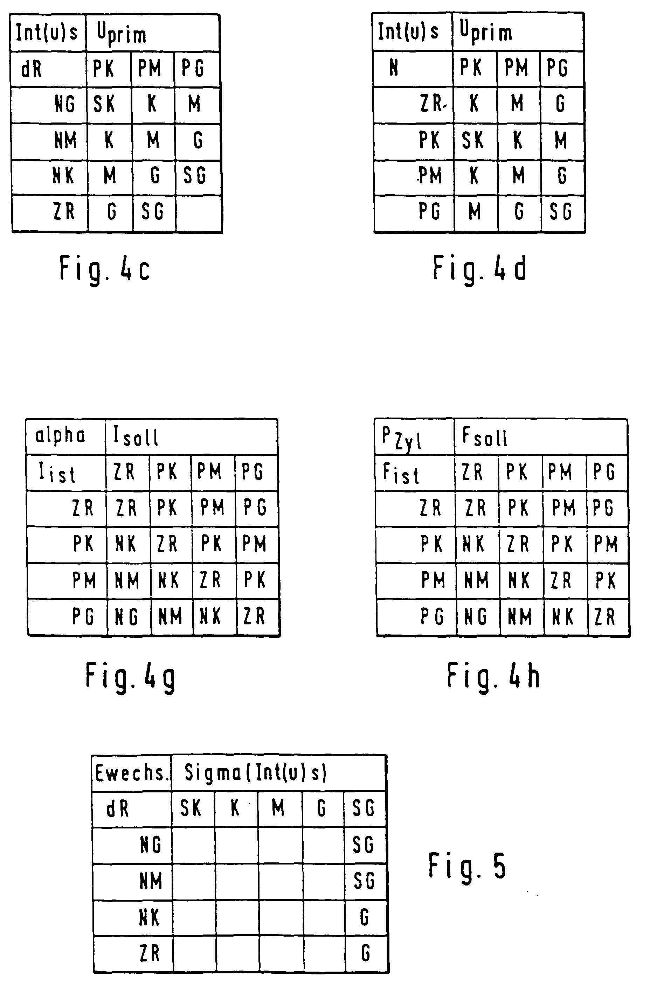

Es zeigen Figur 1 eine Schweißanordnung, Figur 2 die Struktur eines Regelkreises zur Regelung von Schweißstrom und Elektrodenkraft, Figur 3 ein Beispiel einer Zugehörigkeitsfunktion, Figur 4 einen Satz möglicher Verknüpfungsregeln für das Beispiel der Figur 2.

### Beschreibung des Ausführungsbeispiels

Figur 1 zeigt den prinzipiellen Aufbau einer typischen Mittelfrequenzschweißanlage. Ihre Hauptbestandteile sind ein mit dem Netz 12, in der Regel ein 3-Phasen-Netz, verbundener Gleichrichter 13, ein mit dessen Gleichstromausgängen verbundener Wechselrichter 14, ein von diesem gespeister Transformator mit Gleichrichtereinheit 15, die Schweißelektroden 17, 17', sowie eine Regeleinrichtung 10, welche insbesondere den Wechselrichter 14 steuert. Mit den Bezugszahlen 16, 16' sind zwei miteinander zu verschweißende Bleche bezeichnet. Zum Andrücken der Elektroden 17, 17' auf die Bleche 16, 16' dient eine Stelleinrichtung 11, welche z.B. einen Druckzylinder zum Einstellen der Elektrodenandruckkraft enthält. An der die Elemente 14 bis 17' umfassenden Regelstrecke sind in bekannter Weise verschiedene Sensoren 18, 19, 19' angeordnet, deren Ausgangssignale der Regeleinheit 10 zugeführt sind. In Figur 1 sind beispielhaft ein Stromsensor 18 zur Erfassung des Schweißstroms I_{Ist} sowie ein Sensorpaar 19, 19' zur Erfassung der Elektrodenandruckkraft F_{Ist} dargestellt. Mögliche weitere Sensoren sind zum Beispiel Sensoren zur Erfassung der Elektrodenspannung, zur Erfassung der Spannung an der Primär- und/oder der Sekundärseite des Transformators 15, Sensoren zur Erfassung von Schallemissionen, Sensoren zur Erfassung der Elektrodenbewegung, wobei sowohl Beschleunigung, Geschwindigkeit oder Weg erfaßt werden können, oder Sensoren zur Erfassung von Signalen aus einer Ultraschallprüfung oder Infrarotüberwachung. Vorgesehen sein können auch Sensoren zur Erfassung von indirekten Eingangsgrößen, so zum Beispiel der Spritzerhäufigkeit, der Elektrodenform oder des Elektrodenverschleißes, des Schweißlinsenwachstums oder des Schweißlinsendurchmessers.

Der Regler 10 ist verbunden mit einer Steuereinheit 20. Sie dient einerseits zur Einbindung der Anordnung 12 bis 19' in ein übergeordnetes Bearbeitungssystem, das zum Beispiel aus mehreren parallel angeordneten Anordnungen des in Figur 1 gezeigten Typs bestehen kann. Daneben weist sie eine Ein-/Ausgabeeinheit auf, in der Regel in Form einer alphanumerischen Tastatur mit einem Bildschirm, über welche einem Bediener der Zugriff auf den Regler 10 möglich ist. Insbesondere erfolgt über die Steuereinheit 20 die Eingabe von für die Durchführung eines Schweißprozessors benötigten Eingangsgrößen, etwa hinsichtlich des Materials, zum Beispiel ob Stahl oder Aluminium, hinsichtlich der Oberflächenbeschaffenheit, zum Beispiel ob blank oder verzinkt, hinsichtlich der Dicke der zu schweißenden Bleche 15, 16', zum Beispiel 2 x 0,8 mm oder 1 x 0,8 mm und 1 x 1,2 mm, oder der gewünschten Stromzeit, beispielsweise, ob es sich um eine Langzeit-. Mittelzeit- oder Kurzzeitschweißung handelt.

Dem Regler zugeordnet ist eine ebenfalls mit der Steuereinheit 20 in Verbindung stehende Überwachungseinheit 10'. Sie wertet die im Regler 10 eingehenden Meß- und Eingangsgrößen im Hinblick auf möglicherweise vorliegende Fehler oder Störungen aus. Stellt die Überwachungseinheit 10' einen Fehler fest, zum Beispiel, daß die Kühlung der Elektroden 17, 17' zu gering ist, die Schweißung zu kalt, die zugeführte Energie zu klein ist, sich zwischen den Elektroden kein Blech befindet, Elektrodenwechsel erforderlich ist, ein Sensor defekt ist, oder die Spritzerhäufigkeit zu groß ist, gibt sie eine Fehler- bzw. Diagnosemeldung aus, welche auch auf der Anzeige der Steuereinheit 20 erscheint.

Figur 2 zeigt für das Beispiel der Regelung des Schweißstromes I und der Elektrodenkraft F eine mögliche Struktur einer für diesen Fall verwendbaren Regeleinrichtung. Sie weist sechs einzelne Regler F1 bis F6 auf, wobei die Regler F1 bis F5 der Regelstrecke G, sie entspricht bezogen auf die Anordnung in Figur 1 den Elementen 14 bis 17', vorgeschaltet sind und zur Regelung der Stellgrößen Pulsweite oder Phasenanschnitt α und Zylinderdruck P_{Zyl} dienen, während der Regler F6 der Strecke G nachgeschaltet ist und zur Überwachung der Regelstrecke dient. Erfindungsgemäß ist wenigstens einer der Regler F1 bis F6 als nach den Gesetzen der unscharfen Logik arbeitender Regler (Fuzzyregler) ausgeführt. Durchaus sinnvoll, und dieser Fall wird für das Beispiel Figur 2, zugrundegelegt, ist es, alle Regler F1 bis F6 als Fuzzyregler auszuführen. Nachfolgend wird für diesen Fall die Funktion der Regler F1 bis F6 im einzelnen erläutert.

Der Regler F1 dient zur Ermittlung zweckmäßiger Sollwerte I_{Soll} für den Schweißstrom bzw. F_{Soll} für die Elektrodenandruckkraft. Hierzu sind ihm als Eingangsgrößen E1 und E2 die über die Steuereinheit 20 programmierte Werte für die Dicke der zu verschweißenden Bleche 16, 16' sowie die gewünschte Schweißzeitdauer, also Kurzzeit-, Mittelzeit- oder Langzeitschweißen. zugeführt. Daneben können, dies ist nicht dargestellt, ihm ferner seitens der Steuereinheit 20 vorgegebene Angaben über das zu schweißende Material oder dessen Oberflächenbeschaffenheit zugeführt sein.

Aufgabe der Regler F2 und F3 ist es, den Schweißvorgang auf anhaltende Verschiebungen von Einflußgrößen zu überwachen und gegebenenfalls eine Nachstellung der für den Schweißstrom bzw. die Elektrodenandruckkraft vorgegebenen Sollwerte I_{Soll} bzw. F_{Soll} vorzunehmen. Als Meßgrößen sind hierzu beiden Reglern F2, F3 die Primärspannung, die Elektrodenspannung U_{S}, der Istwert des Schweißstromes I_{Ist}, sowie die ermittelte Elektrodenandruckkraft F_{Ist} zurückgeführt. Beide Regler F2, F3 berücksichtigen bei der Ermittlung der gegebenenfalls nachgestellten Sollwerte dI_{Soll}, dF_{Soll} für Schweißstrom bzw. Elektrodenkraft weiterhin noch das zeitliche Verhalten der Schweißwiderstände sowie das Zeitintegral über der Elektrodenspannung, welche sie aus den Meßwerten bestimmen.

Der Regler F4 bestimmt einen Phasenanschnittswinkel α zum Verstellen des Schweißstromes - bei Verwendung einer Anordnung gemäß Figur 1 wird er hierfür zweckmäßig in eine Pulsweite umgesetzt -, welchen er auf den vom Regler F2 vorgegebenen Sollwert dI_{Soll} regelt. Hierzu ist ihm der für den Schweißstrom gemessene Wert I_{Ist} zurückgeführt.

Der Regler F5 ermittelt einen Zylinderdruck P_{Zyl} zum Verstellen der Elektrodenandruckkraft, den er auf den vom Regler F3 vorgegebenen Kraftsollwert dF_{Soll} regelt. Rückführgröße für den Regler F5 ist der gemessene Istwert der Elektrodenandruckkraft F_{Ist}.

Aufgabe des Reglers F₆ ist die Überwachung von Schweißstrecke G und Regelung im Hinblick auf ihren Betriebszustand sowie auf eventuelle Fehler. Hierzu sind ihm neben allen gemessenen Einflußgrößen, im Beispiel Figur 2 die Ist-Werte für Primärspannung. Elektrodenspannung U_{S}, Schweißstrom I_{Ist} und Elektrodenandruckkraft F_{Ist}, weiterhin über die Steuereinheit 20 vorgegebene Angaben E3, wie Referenzwerte, Toleranzbänder oder zulässige Standardabweichungen. etwa für das Integral der Elektrodenspannung oder die Widerstandsänderung, zugeführt. Aus den Meßgrößen berechnet der Regler F6 neben dem Zeitintegral der Elektrodenspannung und der Widerstandsänderung noch die Werte für die Schweißenergie und die Schweißleistung.

Es wird angenommen, daß alle Regler F1 bis F6 als Fuzzyregler ausgeführt sind. Allen liegt dann dieselbe Funktionsweise zugrunde, die im folgenden erläutert wird.

Die Eingangsgrößen, zum Beispiel im Falle des Reglers F1, die Werte für die Blechdicke und die gewünschte Stromzeit, werden zunächst mit Hilfe einer auf Eins normierten, nichtlinear definierten (unscharfen) Zugehörigkeitsfunktion linguistischen Werten zugeordnet. Figur 3 zeigt als Beispiel hierfür eine mögliche Zuordnung der Dicke eines Bleches zu den linguistischen Werten sehr klein (SK), klein (K), mittel (M), groß (G) und sehr groß (SG). Aufgetragen ist die auf den Wert 1, entsprechend 100 %, genormte Zugehörigkeit Z über der Blechdicke D. Danach entsprechen alle Bleche mit einer Dicke D < d₁ dem Wert sehr klein (SK), Bleche mit einer Dicke d₁ < D < d₂ mit veränderlichem Anteil den Werten sehr klein (SK) und klein (K), Bleche mit d₂ < D < d₃ mit veränderlichem Anteil den Werten klein (K) und Mittel (M), Bleche mit d₃ < D < d₅ anteilig den Werten mittel (M) und groß (G), Bleche mit d₅ < D < d₆ anteilig den Werten groß (G) und sehr groß (SG) und Bleche mit D < d₆ dem Wert sehr groß (SG). Ein Blech der Dicke dₓ entspricht beispielsweise zu 20 % dem Wert mittel (M), zu 80 % dem Wert klein (K).

Zugehörigkeitsfunktionen, wie in Figur 3 dargestellt, sind für jede Eingangsgröße und für jeden Regler zu definieren. Die Festlegung des genauen Verlaufs erfolgt dabei entsprechend der Kenntnisse eines Fachmanns.

In gleicher Weise werden auch die Ausgangsgrößen der Regler F1 bis F6 mittels Zugehörigkeitsfunktionen linguistischen Werten zugeordnet.

Jedem Regler F1 bis F6 sind linguistisch formulierte Verknüpfungsregeln vorgegeben, gemäß denen er die Eingangsgrößen zu einer - linguistischen - Ausgangsgröße verknüpft, welcher über die Zugehörigkeitsfunktion ein oder mehrerer Wertebereiche für den exakten Wert der Ausgangsgröße zugeordnet sind. Für den Regler F1 können diese Verknüpfungsregeln beispielsweise wie folgt lauten:
- wenn vorgegebene Stromzeit (STZ) sehr klein (SK) und Blechdicke sehr klein (SK), dann Stromsollwert I_{Soll} klein (K)
- wenn Stromzeit (STZ) sehr klein (SK) und Blechdicke klein (K), dann Stromsollwert I_{Soll} mittel (M)
- wenn Stromzeit (STZ) sehr klein (SK) und Blechdicke mittel, groß oder sehr groß (M, G oder SG), wird diesen Eingangsgrößenkombinationen kein bestimmter Stromsollwert I_{Soll} zugeordnet. Der Stromsollwert kann in Abhängigkeit von der Form der Zugehörigkeitsfunktionen der linguistischen Werte anderer Regeln verändert werden.

In gleicher Weise sind Verknüpfungen zwischen den weiteren möglichen Stromzeitwerten (STZ) entsprechend den linguistischen Werten klein (K), mittel (M), groß (G) mit allen möglichen linguistischen Werten für die Blechdicke klein (K), mittel (M), groß (G) und sehr groß (SG) vorgegeben. Zur Vereinfachung der Wiedergabe werden die Verknüpfungsregeln zweckmäßig in Form einer Matrix angegeben. Eine Darstellung möglicher Verknüpfungsregeln für den Regler F1 ist in Figur 4a gegeben. In der Matrix bezeichnet die erste Zeile linguistisch die möglichen Werte für die Blechdicke, die erste Spalte linguistisch die möglichen Werte für die Stromzeit, während die Kreuzungspunkte zwischen Zeilen und Spalten jeweils einen den Eingangswerten zugeordneten Sollstromwert I_{Soll} bezeichnen. Ein leeres Feld zeigt an, daß eine eindeutige Zuordnung für die betreffenden Eingangsgrößen nicht möglich ist.

Da zumeist wenigstens eine Eingangsgröße anteilig mehreren linguistischen Werten zugehört, liefern die Verknüpfungen im allgemeinen mehrere mögliche Wertebereiche für die gesuchte Ausgangsgröße. Hat beispielsweise die Zugehörigkeitsfunktion für die

Ausgangsgröße das in Figur 3 dargestellte Aussehen, liefert eine Zugehörigkeit von 60 %, entsprechend 0,6 zum linguistischen Ausgangswert mittel (M) den Wertebereich von a₁ bis a₂ als mögliche exakte Ausgangsgröße A.

Aus diesen möglichen Wertebereichen für die Ausgangsgröße ermittelt der Regler in bekannter Weise, zum Beispiel durch Bildung des Flächenschwerpunktes oder eines Mittelwertes, eine exakte Ausgangsgröße, im Falle des Reglers F1 den exakten Wert für den Stromsollwert I_{Soll}.

Analog zur Ermittlung des Stromsollwertes I_{Soll} ermittelt der Regler F1 den Sollwert für den Elektrodenanpreßdruck F_{Soll}. Einen Satz möglicher Verknüpfungsregeln für diese Ermittlung ist in Figur 4b als Matrix dargestellt.

Figur 4c zeigt in Matrixform einen Satz Verknüpfungsregeln für die Regler F2 und F3 zur Ermittlung eines Soll-Wertes für das Integral der Elektrodenspannung Int U_{S} aus den Eingangsgrößen Primärspannung U_{Prim} und Änderung des Schweißwiderstandes dR. Zur Beschreibung der Eingangsgrößen dienen hier die linguistischen Variablen negativ groß (NG), negativ mittel (NM), negativ klein (NK), ungefähr Null (ZR), positiv klein (PK), positiv mittel (PM) und positiv groß (PG). Das Verknüpfungsergebnis, das Integral der Elektrodenspannung Int U_{S} ist wie die Verknüpfungsgrößen in den Figuren 4a und b durch die linguistischen Werte sehr klein (SK) bis sehr groß (SG) dargestellt.

Figur 4d zeigt eine ebenfalls für die Regler F2 und F3 vorgesehene Matrix mit Verknüpfungsregeln zur Ermittlung einer dem Integral der Elektrodenspannung Int U_{S} entsprechenden linguistischen Größe sehr klein (SK) bis positiv sehr groß (SG) aus den beiden Eingansgrößen Primärspannung U_{Prim} und Zählerstand des Elektrodenandruckzylinders N. Zur Beschreibung der Eingangsgröße N dienen hier die linguistischen Variablen ungefähr Null (ZR) bis positiv groß (PG).

Figur 4e zeigt eine für den Regler F2 vorgesehene Matrix mit Verknüpfungsregeln zur Gewinnung eines nachgeführten Stromsollwertes dI_{Soll} aus den beiden zuvor ermittelten Sollgrößen Integral über der Schweißspannung IntI U_{S} und dem gemessenen Wert des Intergrals der Elektrodenspannung IntUᵢ.

Figur 4f zeigt eine analog zur Matrix Figur 4e aufgebaute Matrix zur Gewinnung eines nachgeführten Sollwertes für den Elektrodenanpreßdruck dF_{Soll}.

Figur 4g zeigt eine im Regler F4 eingesetzte Matrix mit Verknüpfungsregeln zur Gewinnung der Stellgröße Phasenanschnittswinkel α aus den beiden Eingangsgrößen nachgeführter Stromsollwert dI_{Soll} und gemessener Stromistwert I_{Ist}.

Figur 4h zeigt eine im Regler F5 einsetzbare Matrix mit Verknüpfungsregeln zur Gewinnung eines Stellwertes für den Zylinderdruck P_{Zyl} zur Verstellung der Elektrodenandruckkraft aus den beiden Eingangsgrößen nachgeführter Sollwert für den Elektrodenanpreßdruck dF_{Soll} und dem gemessenen Istwert F_{Ist}.

Figur 5 zeigt eine für den Regler F6 vorgesehene Matrix mit Verknüpfungsregeln zur Ermittlung einer Elektrodenwechselinformation E_{Wechsel}. Eingangsgrößen sind in diesem Fall die Änderung des Schweißwiderstandes dR sowie die zuvor rechnerisch ermittelte Standardabweichung des Integrals über die Elektrodenspannung σ (Int U_{S}). Ein Wechsel der Elektrode ist nach dieser Verknüpfungsregel dann erforderlich, wenn die Standardabweichung (Int U_{S}) dem linguistischen Wert sehr groß (SG) entspricht, wobei die Notwendigkeit eines Elektrodenwechsels dann sogar sehr groß (SG) ist, wenn die Änderung des Widerstandes negativ groß (NG) oder negativ mittel (NM) ist. Entspricht σ (Int U_{S}) dagegen einem der linguistischen Werte sehr klein (SK) bis groß (G), ist ein Elektrodenwechsel unabhängig vom Wert der zweiten Eingangsgröße dR nicht erforderlich.

Zwar werden im Beispiel gemäß Figur 2 nur die beiden Größen Schweißstrom und Elektrodenanpreßdruck geregelt. In gleicher Weise können aber auch folgende weitere Eingangsgrößen geregelt werden: Temperatur des Kühlwassers: Bewegung der Elektroden, insbesondere Beschleunigung, Geschwindigkeit oder Weg; Primärstrom; Primärspannung; Stromzeit; Schweißleistung; Schweißenergie oder Widerstandsänderungen.

Nicht erforderlich ist, daß alle Regler F1 bis F6 als Fuzzyregler ausgebildet sind. Beispielsweise könnte anstelle des Reglers F4 auch eine herkömmliche Konstantstromregelung eingesetzt werden, deren Regelparameter zum Beispiel durch einen Fuzzy-Trenderkennungsregler F2 nachgeführt werden. Selbstverständlich möglich ist auch, auf die Trenderkennungsregler F2 bzw. F3 überhaupt zu verzichten und stattdessen die gemessenen bzw. ermittelten Schweißeinflußgrößen direkt zu einer Stellgröße zu verknüpfen.

Obgleich nur zur Regelung zweier Einflußgrößen ausgelegt, vermittelt das Beispiel Figur 2 die erfindungsgemäß vorgeschlagenen Prinzipien zum Aufbau eines auf beliebig vielen gemessenen oder bestimmten Einflußgrößen beruhenden Verfahrens zur Steuerung einer Widerstandsschweißanordnung.

## Patentansprüche

1. Widerstandsschweißanordnung mit einer Stromstellvorrichtung (14), einem Paar Schweißelektroden (17, 17'), einer Regeleinheit (10) , einem der Regeleinheit (10) zugeordneten Mikroprozessor sowie Sensoren (18, 19, 19') zur Erfassung der Primärspannung (U_{Prim}), der Sekundärspannung (U_{S}), und des Iststromes (I_{Ist}), dadurch gekennzeichnet, daß
- die Regeleinheit (10) einen als Fuzzy-Regler ausgeführten Nachführregler (F2) zum Erzeugen eines nachgeführten Sollwertes (dI_{Soll}) für den Schweißstrom sowie einen diesem nachgeschalteten Regler (F4) zum Verstellen einer den Schweißstrom bestimmenden Stellgröße (α) aufweist,
- dem Nachführregler (F2) die erfaßten Werte für die Primärspannung (U_{Prim}), die Sekundärspannung (U_{S}), den Iststrom (I_{Ist}), sowie der Sollwert für den Schweißstrom (I_{Soll}) zugeführt sind, welche er nach den Prinzipien der Fuzzy-Logik miteinander verknüpft, um einen nachgeführten Stromsollwert (dI_{Soll}) zu erzeugen,
- dem Regler (F4) der nachgeführte Stromsollwert (dI_{Soll}) sowie der Schweißstromistwert (I_{Ist}) zugeführt sind und er den Schweißstromistwert (I_{Ist}) auf den nachgeführten Sollwert (dI_{Soll}) regelt.

2. Widerstandsschweißanordnung mit einer Stromsteilvorrichtung (14), einem Paar Schweißelektroden (17, 17'), einer Regeleinheit (10), einer Überwachungseinheit (10'), einem der Regeleinheit (10) und/oder der Überwachungseinheit (10') zugeordneten Mikroprozessor sowie Sensoren (18, 19, 19') zur Erfassung der Primärspannung (U_{Prim}), der Sekundärspannung (U_{S}) , der Elektrodenkraft (Fᵢₛₜ) und des Iststromes (Iᵢₛₜ), dadurch gekennzeichnet, daß
- die Regeleinheit (10) einen als Fuzzy-Regler ausgeführten Nachführregler (F3) zum Erzeugen eines nachgeführten Sollwertes (dF_{Soll}) für die Elektrodenandruckkraft sowie einen diesem nachgeschalteten Regler (F5) zum Verstellen einer die Elektrodenandruckkraft bestimmenden Stellgröße (P_{Zyl}) aufweist,
- dem Nachführregler (F3) die erfaßten Werte für die Primärspannung (U_{Prim}), die Sekundärspannung (U_{S}), den Iststrom (I_{Ist}) die Elektrodenkraft (F_{Ist}) sowie der Sollwert für die Elektrodenandruckkraft (F_{Soll}) zugeführt sind, welche er nach den Prinzipien der Fuzzy-Logik miteinander verknüpft, um einen nachgeführten Sollwert für die Elektrodenandruckkraft (d_{Soll}) zu erzeugen,
- dem Regler (F5) der nachgeführte Sollwert (dF_{Soll}) sowie der Istwert der Elektrodenandruckkraft (F_{Ist}) zugeführt sind und er den Istwert der Elektrodenandruckkraft (I_{Ist}) auf den nachgeführten Sollwert (dF_{Soll}) regelt.

3. Widerstandsschweißanordnung nach Anspruch 2, gekennzeichnet dadurch, daß parallel zur Regelung der Elektrodenandruckkraft eine Regelung des Schweißstromes gemäß Anspruch 1 erfolgt.

4. Widerstandsschweißanordnung nach Anspruch 1 oder 2, dadurch gekennzeichnet, daß die Regeleinheit (10) einen Regler (F1) aufweist, dem wenigstens zwei Angaben über zu schweißendes Material, Oberflächenbeschaffenheit des zu schweißenden Materiales, Blechdicke, Blechkombination oder gewünschte Stromzeit zugeführt sind, welche er nach den Prinzipien der Fuzzy-Logik verknüpft, um einen Schweißstromsollwert (Iₛₒₗₗ) zu ermitteln.

5. Widerstandsschweißanordnung mit einer Stromstellvorrichtung (14), einem Paar Schweißelektroden (17, 17'), einer Regeleinheit (10) , einem der Regeleinheit (10) zugeordneten Mikroprozessor sowie Sensoren zur Erfassung der Primärspannung (U_{Prim}), der Sekundärspannung (U_{S}) und des Iststromes (I_{Ist}),
gekennzeichnet dadurch, daß
ihr eine Überwachungseinheit (10') zugeordnet ist, die einen Regler (F6) beinhaltet, dem die erfaßten Werte für Primärspannung (U_{Prim}), Sekundärspannung (U_{S}) und Iststrom (I_{Ist}) zugeführt sind, welche er nach den Prinzipien der Fuzzy-Logik miteinander verknüpft, um eine Aussage über vorliegende Fehler oder Störungen zu ermitteln, wobei die Überwachungseinheit (10') eine Diagnosemeldung (E_{wechsel}) ausgibt, wenn der Regler (F6) einen Fehler oder eine Störung feststellt.

## Claims

1. Resistance welding arrangement having a current control apparatus (14), a pair of welding electrodes (17, 17'), a regulating unit (10), a microprocessor which is associated with the regulating unit (10), as well as sensors (18, 19, 19') for detecting the primary voltage (Uₚᵣᵢₘ), the secondary voltage (Uₛ) and the actual current (I_{act}), characterized in that
- the regulating unit (10) has a follow-up regulator (F2), designed as a fuzzy regulator, for producing a readjusted required value (dI_{reg}) for the welding current, and has a regulator (F4), connected downstream of this follow-up regulator (F2) for adjusting a manipulated variable (α) which determines the welding current,
- the follow-up regulator (F2) is supplied with the detected values for the primary voltage (Uₚᵣᵢₘ), the secondary voltage (Uₛ), the actual current (I_{act}) as well as the required value for the welding current (I_{req}), which it links to one another using the principles of fuzzy logic, in order to produce a readjusted required current value (dI_{req})
- the regulator (F4) is supplied with the readjusted required current value (dI_{req}) and with the actual welding current value (I_{act}), and it regulates the actual welding current value (I_{act}) at the readjusted required value (dI_{req}).

2. Resistance welding arrangement having a current control apparatus (14), a pair of welding electrodes (17, 17'), a regulating unit (10), a monitoring unit (10'), a microprocessor which is associated with the regulating unit (10) and/or the monitoring unit (10'), as well as sensors (18, 19, 19') for detecting the primary voltage (Uₚᵣᵢₘ), the secondary voltage (Uₛ), the electrode force (F_{act}) and the actual current (I_{act}), characterized in that
- the regulating unit (10) has a follow-up regulator (F3), designed as a fuzzy regulator, for producing a readjusted required value (dF_{req}) for the electrode contact-pressure force, and has a regulator (F5), connected downstream of this follow-up regulator (F3) for adjusting a manipulated variable (P_{cyl}) which determines the electrode contact-pressure force,
- the follow-up regulator (F3) is supplied with the detective values for the primary voltage (Uₚᵣᵢₘ), the secondary voltage (Uₛ), the actual current (I_{act}), the electrode force (F_{act}) as well as the required value for the electrode contact-pressure force (F_{req}), which it links to one another using the principles of fuzzy logic, in order to produce a readjusted required value for the electrode contact-pressure force (d_{req}).
- the regulator (F5) is supplied with the readjusted required value (dF_{req}) and with the actual value of the electrode contact-pressure force (F_{act}), and it regulates the actual value of the electrode contact-pressure force (I_{act}) at the readjusted required value (dF_{req}).

3. Resistance welding arrangement according to Claim 2, characterized in that the welding current is regulated according to Claim 1, in parallel with the regulation of the electrode contact-pressure force.

4. Resistance welding arrangement according to Claim 1 or 2, characterized in that the regulating unit (10) has a regulator (F1) to which at least two data items are supplied relating to the material to be welded, the surface condition of the material to be welded, the sheet-metal thickness, the sheet-metal combination or the desired current time, which it links using the principles of fuzzy logic in order to determine a required welding current value (I_{req}).

5. Resistance welding arrangement having a current control apparatus (14), a pair of welding electrodes (17, 17'), a regulating unit (10), a microprocessor which is associated with the regulator unit (10) as well as sensors for detecting the primary voltage (Uₚᵣᵢₘ), the secondary voltage (Uₛ) and the actual current (I_{act}),
characterized in that
said arrangement is assigned a monitoring unit (10') which contains a regulator (F6) to which the detected values for the primary voltage (Uₚᵣᵢₘ), the secondary voltage (Uₛ) and actual current (I_{act}) are supplied, which it links to one another using the principles of fuzzy logic, in order to determine a statement relating to deflects or faults which are present, in which case the monitoring unit (10') emits a diagnosis message (E_{replace}) when the regulator (F6) detects a fault or a defect.

## Revendications

1. Agencement de soudage par résRéelance comprenant un dispositif de réglage du courant (14), une paire d'électrodes de soudage (17, 17'), une unité de réglage (10), un microprocesseur ainsi que des détecteurs (18, 19, 19'), associés à l'unité de réglage (10) qui servent à détecter la tension primaire (U_{Prim}), la tension secondaire (U_{S}), et l'intensité réelle (I_{Réel}),
caractérisé en ce que
• l'unité de réglage (10) présente un régulateur de poursuite (F2), réalisé sous la forme d'un régulateur Fuzzy, servant à produire une valeur de consigne de poursuite (dI_{Cons}) pour l'intensité du courant de soudage, ainsi qu'un régulateur (F4), monté en aval, servant à régler une grandeur (α) déterminant l'intensité du courant de soudage,
• les valeurs détectées pour la tension primaire (U_{Prim}), pour la tension secondaire (U_{S}), pour l'intensité réelle (I_{Réel}), ainsi que la valeur de consigne pour l'intensité de consigne (I_{Cons}) sont amenées au régulateur de poursuite (F2), valeurs que le régulateur combine les unes aux autres selon les principes de la logique de Fuzzy, pour produire une valeur de consigne de l'intensité de poursuite (dI_{Cons}),
• la valeur de consigne de l'intensité de poursuite (dI_{Cons}) ainsi que la valeur réelle de l'intensité du courant de soudage (I_{Réel}) sont amenées au régulateur (F4), et ce régulateur règle la valeur réelle de l'intensité du courant de soudage (I_{Réel}) sur la valeur de consigne de poursuite (dI_{Cons}).

2. Agencement de soudage par résRéelance comprenant un dispositif de réglage du courant (14), une paire d'électrodes de soudage (17, 17'), une unité de réglage (10), une unité de surveillance (10'), un microprocesseur ainsi que des détecteurs (18, 19, 19'), associés à l'unité de réglage (10) et/ou à l'unité de surveillance (10') qui servent à détecter la tension primaire (U_{Prim}), la tension secondaire (U_{S}),la pression des électrodes (F_{Réel}) et l'intensité réelle (IRéel),
caractérisé en ce que
• l'unité de réglage (10) présente un régulateur de poursuite (F3) réalisé sous la forme d'un régulateur Fuzzy, servant à produire une valeur de consigne de poursuite (dF_{Cons}) pour la force de pression des électrodes, ainsi qu'un régulateur (F5), monté en aval servant à régler une grandeur (P_{Zyl}), déterminant la force de pression des électrodes,
• les valeurs détectées pour la tension primaire (U_{Prim}), pour la tension secondaire (U_{S}), pour l'intensité réelle (I_{Réel}), pour la force de pression des électrodes (F_{Réel}), ainsi que la valeur de consigne pour la force de pression des électrodes (F_{Réel}) sont amenées au régulateur de poursuite (F3), valeurs que le régulateur combine les unes aux autres selon les principes de la logique de Fuzzy, pour produire une valeur de consigne de poursuite pour la force de pression des électrodes (dF_{Cons}),
• la valeur de consigne de poursuite (dF_{Cons}) ainsi que la valeur réelle de la force de pression des électrodes (F_{Réel}) sont amenées au régulateur (F5), et ce régulateur règle la valeur réelle de la force de pression des électrodes (F_{Réel}) sur la valeur de consigne de poursuite (dF_{Cons}).

3. Agencement de soudage par résRéelance selon la revendication 2,
caractérisé en ce que
parallèlement au réglage de la force de pression des électrodes a lieu un réglage de l'intensité du courant de soudage selon la revendication 1.

4. Agencement de soudage par résRéelance selon la revendication 1 ou 2,
caractérisé en ce que
l'unité de réglage (10) présente un régulateur (F1) auquel sont amenées au moins deux indications sur la matière à souder, l'état de surface de la matière à souder, l'épaisseur de la tôle, la combinaison des tôles ou le temps de passage voulu du courant, que le régulateur combine selon les principes de la logique de Fuzzy, pour déterminer une valeur de consigne de l'intensité du courant de soudage (I_{Cons}).

5. Agencement de soudage par résistance comprenant un dispositif de réglage du courant (14), une paire d'électrodes de soudage (17, 17'), une unité de réglage (10), un microprocesseur ainsi que des détecteurs, associés à l'unité de réglage (10) qui servent à détecter la tension primaire (U_{Prim}), la tension secondaire (U_{S}), et l'intensité réelle (I_{Réel}),
caractérisé en ce qu'
on leur associe une unité de surveillance (10') qui contient un régulateur (F6), auquel sont amenées les valeurs détectées pour la tension primaire (U_{Prim}), la tension secondaire (U_{S}) et l'intensité réelle (I_{Réel}), que le régulateur combine selon les principes de la logique de Fuzzy, pour faire un pronostic sur des défauts ou des perturbations exRéelantes, l'unité de surveillance (10') délivrant un diagnostic (E_{change}) quand le régulateur (F6) constate un défaut ou une perturbation.
